(19) Europäisches Patentamt

European Patent Office

Office européen des brevets

(11) **EP 1 499 144 A1**

(12) **EUROPEAN PATENT APPLICATION**

(43) Date of publication:
**19.01.2005 Bulletin 2005/03**

(51) Int Cl.$^7$: **H04Q 7/32**

(21) Application number: **04005491.8**

(22) Date of filing: **08.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **18.07.2003 JP 2003199293**

(71) Applicant: **Kabushiki Kaisha Toshiba
Tokyo (JP)**

(72) Inventor: **Iimori, Eiji
c/o Intellectual Property Divn.
Minato-ku Tokyo 105-8001 (JP)**

(74) Representative: **HOFFMANN - EITLE
Patent- und Rechtsanwälte
Arabellastrasse 4
81925 München (DE)**

(54) **Mobile communication terminal and discontinuous reception method thereof**

(57)     In a mobile communication system, a base station repeatedly transmits paging data a plurality of times to a mobile communication terminal in a preset transmission cycle. In a standby condition, the mobile communication terminal receives the paging data transmitted in a wake-up period, which a first discontinuous reception control section (74) sets in a first discontinuous reception cycle in accordance with the transmission cycle. An Es detector (61) detects reception quality of a signal transmitted from the base station in every wake-up period. An Es determination section (71) and a counter (72) measure stability of the detected reception quality. When the skip determination section (73) determines that the measured stability exceeds a threshold value, a second discontinuous reception control section (75) changes the first discontinuous reception cycle to a second discontinuous reception cycle, which is longer than the first discontinuous reception cycle.

FIG.1

## Description

The present invention relates to a mobile communication terminal used in a radio communication system, such as a car phone or cellular phone system or a radio LAN, more particularly to a mobile communication terminal, which performs a discontinuous reception sequence in a standby status, and also to a discontinuous reception method of the mobile communication terminal.

In a cellular mobile communication network system, a plurality of base stations are distributed in a service area. Each base station forms a radio zone, which is called a cell. In the cell, the base station is wirelessly connected to mobile communication terminals. In this type of system, when a mobile communication terminal is powered on, synchronization between the mobile communication terminal and the nearest base station is established. If the mobile communication terminal moves from one cell to another, a reselection process to switch the base station to be synchronized with is performed and synchronization with the base station in the latter cell is established. After the synchronization is established, the mobile communication terminal enters a standby status.

In the standby status, the mobile communication terminal performs a discontinuous reception sequence. In the discontinuous reception sequence, a wake-up period and a sleep period are set alternately in a given standby cycle. This sequence reduces power consumption of the mobile communication terminal. The wake-up period is set in a reception period for frames allocated to a mobile communication terminal of a plurality of frames that the base station transmits through a paging channel (PCH). The reception period for the other frames is set as the sleep period.

For example, in a mobile communication system employing the WCDMA (Wideband Code Division Multiple Access) system in compliance with 3GPP (3rd Generation Partnership Project), 0-4095 frames are transmitted through the PCH. A mobile communication terminal receives frames allocated to itself of all the 0-4096 frames in 256-frame cycle. However, to receive paging data inserted in the frames in the PCH, the subject mobile communication terminal requires deinterleave and a Viterbi decoding process each time, even if the paging data addressed to the terminal itself is not inserted. Therefore, large power is consumed in the wake-up period. A discontinuous reception sequence in a mobile communication terminal employing W-CDMA is described in, for example, "W-CDMA Mobile Machine" in the magazine "FUJITSU", vol. 51, no. 1, January 2000, page 55.

A technique to reduce the power consumption is known, in which a wake-up period is skipped when the transmission path environment is stable. For example, Jpn. Pat. Appln. KOKAI Publication No. 9-37344 describes the following technique. A base station manages mobile communication terminals in groups. If there is no paging to a group for a given period of time or longer, the base station transmits a notice signal to all the mobile communication terminals in the group. When the mobile communication terminal receives the notice signal, it skips wake-up periods of the number of times designated by the notice signal. According to this technique, the power consumption is reduced by an amount corresponding to the skipped wake-up periods.

However, in the conventional art described above, the base station must perform both monitor of paging in the mobile communication terminal groups and a skip notice process. Therefore, the process load of the base station is increased. Moreover, if the group includes even one mobile communication terminal that has high probability of paging, the skip cannot be performed even if all the other mobile communication terminals in the group have low probability of paging.

An object of the present invention is to provide a mobile communication terminal, which performs a proper skip process in accordance with the use environment of the mobile communication terminal independently of the base station, thereby efficiently reducing the power consumption in the standby state, and also to provide a discontinuous reception method of the mobile communication terminal.

To achieve the above object, a mobile communication terminal according to an aspect of the present invention is as follows. In a mobile communication system, a base station repeatedly transmits paging data a plurality of times to a mobile communication terminal in a preset transmission cycle. In a standby condition, the mobile communication terminal receives the paging data transmitted in a wake-up period, which is set in a first discontinuous reception cycle in accordance with the transmission cycle. Reception quality of a signal transmitted from the base station is detected in every wake-up period, and stability of the detected reception quality is measured. When the measured stability exceeds a threshold value, the first discontinuous reception cycle is changed to a second discontinuous reception cycle, which is longer than the first discontinuous reception cycle.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram showing the structure of a mobile communication terminal according to an embodiment of the present invention;

FIG. 2 is a flowchart showing a discontinuous reception sequence executed in the mobile communication terminal shown in FIG. 1 and contents of the sequence;

FIG. 3 is a timing chart for explaining the discontinuous reception sequence executed in the mobile communication terminal shown in FIG. 1;

FIG. 4 is a timing chart for explaining a reception operation in a wake-up period by the mobile communication terminal shown in FIG. 1;

FIG. 5 is a diagram showing frame formats of a PCH and a PICH transmitted from a base station; and

FIG. 6 is a diagram showing the relationship between the discontinuous reception cycle and the number of times of continuous transmission.

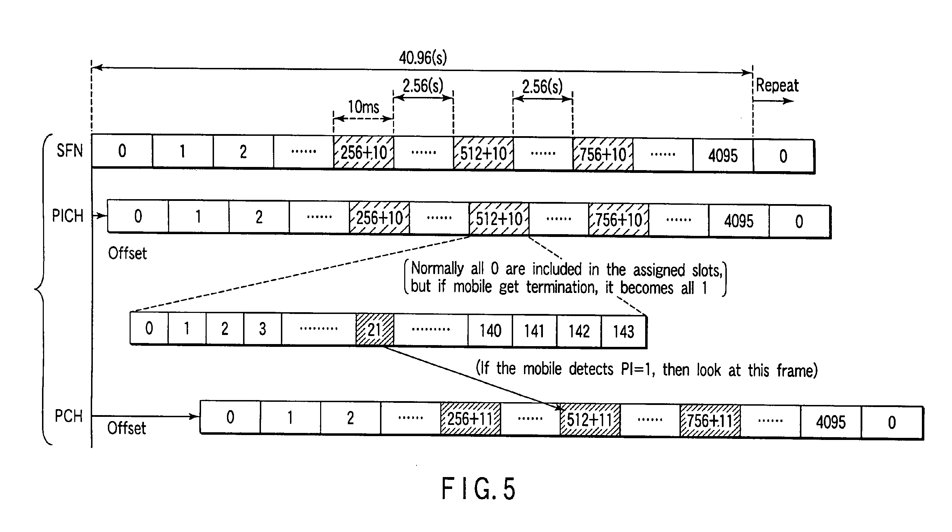

An example will be described, in which the present invention is applied to a mobile communication system employing a WCDMA (Wideband Code Division Multiple Access) in compliance with the 3GPP. The frame formats of control channels, through which a base station in this system transmits data to a mobile communication terminal in the standby status, will be described first. FIG. 5 is a diagram showing examples of the formats.

The control channels, which the base station transmits to the mobile communication terminal in the standby status, include a PCH (Paging Channel) and a PICH (Paging Indicator CH).

Each of the PCH and PICH is formed of 4095 frames assigned the numbers 0 to 4095, called SFN (System Frame Number). There is a predetermined offset between the transmission timings of the PCH and PICH. The 0 to 4095 frames are divided at every 256 frames for convenience of operation. One of the 256 frames is allocated fixedly to one mobile communication terminal.

In other words, the base station repeatedly transmits signals at a 256-frame cycle (2.56 sec) to the individual mobile communication terminals. Therefore, it is only necessary that each mobile communication terminal discontinuously receive the frame allocated to itself at the 256-frame cycle. In the PCH, one frame is divided into 15 slots. Bits are dispersedly inserted in the 15 slots, so that paging data is transmitted.

In the PICH, one frame is divided in to 144 positions. One of the positions is allocated to one mobile communication terminal. The base station transmits paging indicator data using the position allocated to the mobile communication terminal. The paging indicator data notifies the mobile communication terminal of the probability of paging. The paging indicator data has not been subjected to channel coding. Therefore, the mobile communication terminal can check the probability of paging addressed to itself without a deinterleave or Viterbi decoding process.

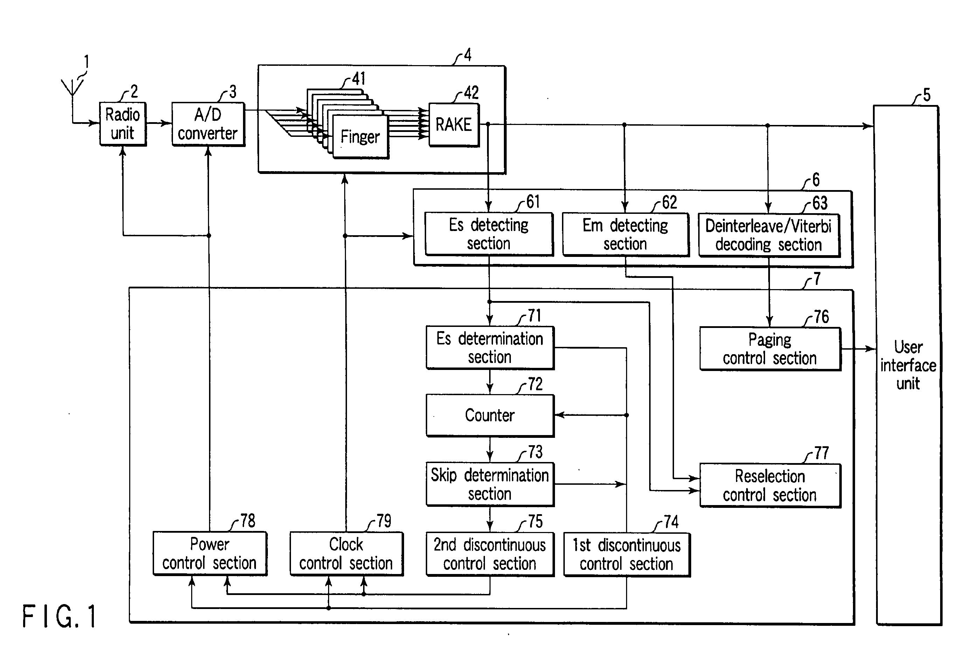

FIG. 1 is a block diagram showing a mobile communication terminal according to an embodiment of the present invention.

A radio signal transmitted from a base station (not shown) is received through an antenna 1 and input to a radio unit 2. The radio unit 2 comprises a low noise amplifier, a frequency converter, and a quadrature demodulator. The low noise amplifier amplifies the received radio signal. The frequency converter and the quadrature demodulator demodulate the amplified radio signal, and convert the demodulated signal to a received baseband signal. The received baseband signal is converted to a digital signal by an analog/digital converter (A/D) 3 and input to a demodulation unit 4.

The demodulation unit 4 comprises a plurality of finger circuits 41 and a RAKE synthesizer 42. The baseband signal includes a plurality of passes, which are received through different transmission paths. The finger circuits 41 inversely diffuse these passes respectively by diffusion codes. The RAKE synthesizer 42 makes the demodulated signals output from the finger circuit 41 in phase, and symbol-synthesizes them.

Digital demodulated data output from the RAKE synthesizer 42 is input to a decoder (not shown). The decoder performs channel-decoding of the input digital demodulated data, and thereafter speech-decoding and image-decoding. Then, the decoder inputs the decoded information data to a user interface unit 5. The user interface unit 5 comprises a microphone, a speaker, a key input device, a display device, etc. Of the decoded information data, speech data is output through the speaker, and image data is displayed in the display device.

The mobile communication terminal of this embodiment comprises a digital signal processor (DSP) 6 and a central processing unit (CPU) 7. The DSP 6 and the CPU 7 form a control unit of the reception system.

The DSP 6 has an Es detecting section 61, an Em detecting section 62 and a deinterleave/Viterbi decoding section 63 as signal processing functions relating to the present invention. The Es detecting section 61 detects a reception level Eserve (hereinafter referred to as Es) of a pilot signal transmitted from a serving base station based on the input digital demodulated data. Synchronization between the mobile communication terminal and the base station has been established. The level Es can be obtained by calculating the ratio between the signal and noise (Ec/No). The Em detecting section 62 detects a reception level Emonitor (hereinafter referred to as Em) of the pilot signal transmitted from a monitored base station of the neighboring base stations. The level Em can also be obtained by calculating the ratio between the signal and noise (Ec/No). The deinterleave/Viterbi decoding section 63 performs a deinterleave process and a Viterbi demodulation process of the paging data received through the PCH.

The CPU 7 comprises an Es determination section 71, a counter 72, a skip determination section 73, a first discontinuous reception control section 74, a second discontinuous reception control section 75, a paging control section 76, a reselection control section 77, a power control section 78 and a clock control section 79.

At every wake-up time, the Es determination section 71 compares the level Es detected by the Es detecting section 61 with a threshold value Sintra. Then, it determines whether the level Es is greater than the value Sintra. The counter 72 counts the number Cskip of times the Es determination section 71 determines that the level Es is greater than the value Sintra. The count Cskips is reset, when the Es determination section 71 determines the level Es is equal to or smaller than Sintra, when the paging control section 76 performs paging control and when the reselection control section 77 performs a reselection process. At every wake-up time, the skip determination section 73 compares the count value Cskip of the counter 72 with a threshold value Nskip. Then, it determines whether the value Cskip is smaller than the value Nskip.

The first discontinuous reception control section 74 executes a first discontinuous reception control algorithm which does not include skipping, when the discontinuous reception cycle T designated by the serving base station is longer than the upper limit value Tupper of the discontinuous reception cycle, when the Es determination section 71 determines that the level Es is equal to or smaller than the value Sintra and when the skip determination section 73 determines that the value Cskip is smaller than the value Nskip.

The second discontinuous reception control section 75 executes a second discontinuous reception control algorithm which includes skipping, when the skip determination section 73 determines that the value Cskip is equal to or greater than the value Nskip. At this time, a new discontinuous reception cycle Tskip, which includes skipping, is set as follows.

More specifically, in the W-CDMA system, since the base stations are asynchronous, there is a random phase difference between the SNFs of the respective base stations. Therefore, if paging data is transmitted in the reselection process of a mobile communication terminal, the mobile communication terminal may not receive the paging data addressed to itself. To avoid this, the base station continuously transmits paging data addressed to one mobile communication terminal many times. As a result, even if the mobile communication terminal fails to receive paging data once, because of the reselection, it can receive the paging data next time. The number of times of the continuous transmission of paging data is set to a value which satisfy the following formula:

$$INT[(\text{discontinuous reception cycle}$$

$$T \times N)/\text{reselection process time}] > 1$$

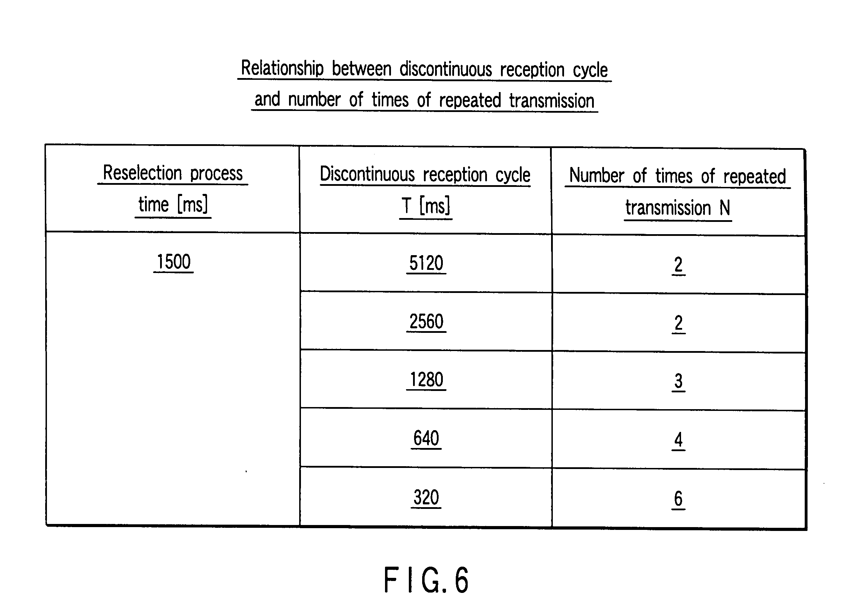

FIG. 6 shows an example of the setting.

In the mobile communication terminal, the second discontinuous reception control section 75 estimates the number N of times of the continuous transmission based on the discontinuous reception cycle T and the time required for the reselection process set in the network system. Based on the estimated value N, the new discontinuous reception cycle Tskip, which includes skipping, is set as follows:

$$Tskip = N \times T$$

When the discontinuous reception cycle T is set in this manner, even if the mobile communication terminal fails to receive paging data addressed to itself during the sleep period including skipping, it can receive any of the paging data transmitted N times from the base station.

When the deinterleave/Viterbi decoding section 63 receives paging data addressed to the mobile communication terminal, the paging control section 76 executes a series of well-known control sequences to notify the paging and respond to the paging. The reselection control section 77 executes a reselection operation, i.e., reselects a base station to be synchronized with, when the Es determination section 71 determines that the level Es is equal to or smaller than the value Sintra and the values Em detected by the Em detecting section 62 include a value that is a predetermined amount greater than the value Es.

The power control section 78 turns on the power supply to the radio unit 2 and the A/D 3 at the wake-up timing determined by the first and second discontinuous reception control sections 74 and 75. The power control section 78 turns off the power supply to the radio unit 2 and the A/D 3 at the sleep preparation execution timing after the end of the wake-up period. The clock control section 79 turns on the supply of an operation clock to the demodulation unit 4 and the DSP 6 at the wake-up timing determined by the first and second discontinuous reception control sections 74 and 75. The clock control section 79 turns off the supply of an operation clock to the demodulation unit 4 and the DSP 6 at the sleep preparation execution timing after the end of the wake-up period.

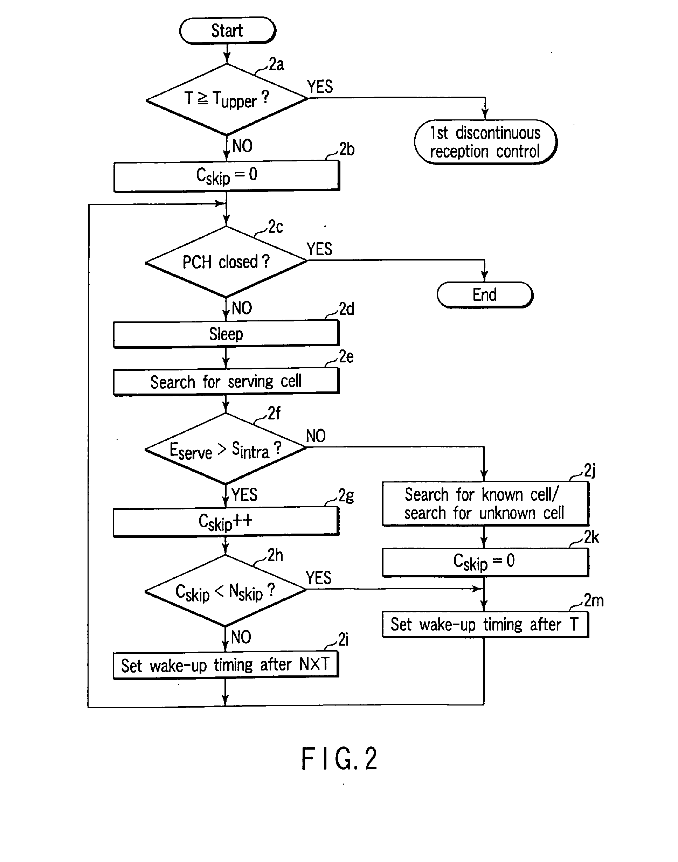

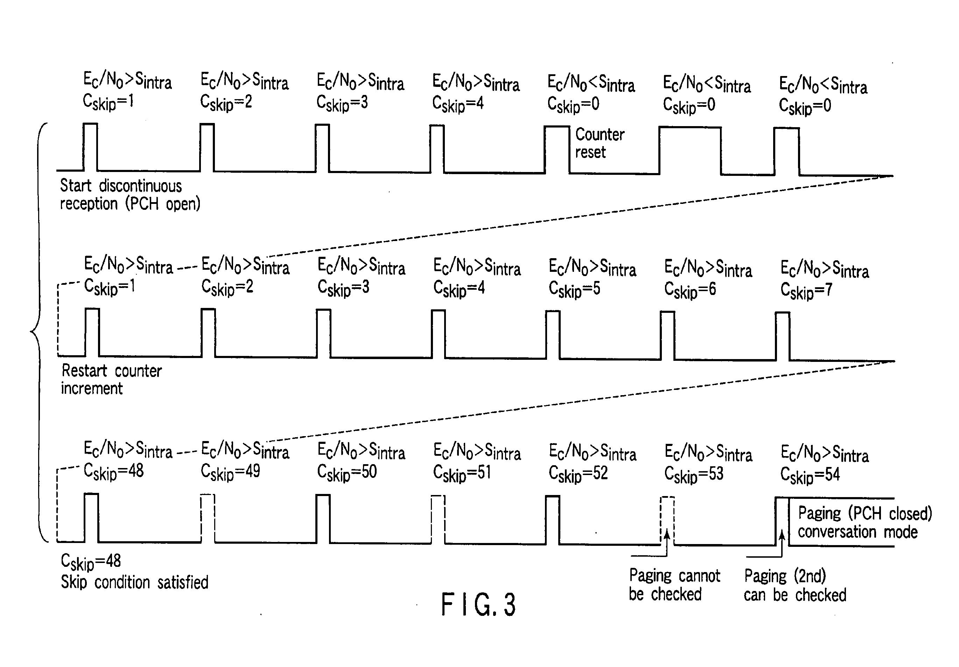

The discontinuous reception operation in the mobile communication terminal having the above structure will now be described. FIG. 2 is a flowchart showing a discontinuous reception control algorithm executed in the mobile communication terminal shown in FIG. 1. FIG. 3 is a timing chart showing the discontinuous reception sequence by the control.

When the mobile communication terminal is powered on or moved from one cell to another cell, the CPU 7 executes a process to establish synchronization with the nearest base station. When the synchronization is established, it starts the discontinuous reception control algorithm as described below along with the serving base station.

First, the CPU 7 sets an uppermost value Tupper of the discontinuous reception cycle and a threshold value Nskip to determine the stability of reception quality. For example, the threshold value Nskip is set to 48.

Next, in a step 2a, the CPU 7 compares the discontinuous reception cycle T set by the network system with the uppermost value Tupper. Then, it determines whether it is possible to apply the second discontinuous reception control algorithm including the skipping. This is because, when the network system prolongs the discontinuous reception cycle to reduce the power consumption of the mobile communication terminal, if the second discontinuous reception control algorithm is applied, the sleep period will become too long to easily control the low-rate clock, etc.

As a result of the above comparison, if the value T is equal to or greater than the value Tupper, the CPU 7 determines it is difficult to apply the second discontinuous reception control algorithm, which includes the skipping. Then, the CPU 7 executes the normal discontinuous reception control by the first discontinuous reception control algorithm, which does not include the skipping. On the other hand, if the value T is smaller than the value Tupper, the CPU 7 resets the counter 72 in a step 2b, and checks that the PCH is not closed (under the paging control) in a step 2c. Thereafter, the CPU 7 executes a sleep shift preparation process in a step 2d and enters the sleep period.

In the sleep period, the CPU 7 monitors the wake-up timing. It starts the wake-up process at the wake-up timing. In the wake-up process, the CPU 7 performs a process of starting the supply of the operation clock to the demodulation unit 4 and the DSP 6 by the clock control section 79 and a process of starting the supply of the power to the radio unit 2 and the A/D 3 by the power control section 78. Subsequently, the CPU 7 detects the reception level Eserve of the pilot signal transmitted from the serving base station in a step 2e. In a step 2f, the CPU 7 compares the detected reception level Eserve with the preset threshold value Sintra.

As a result of the comparison, assume that the reception level Eserve is equal to or smaller than the threshold value Sintra. In this case, the CPU 7 determines that it is difficult to apply the second discontinuous reception control algorithm, because the reception level is low. Then, the CPU 7 executes the normal discontinuous reception control by the first discontinuous reception control algorithm, as will be described below.

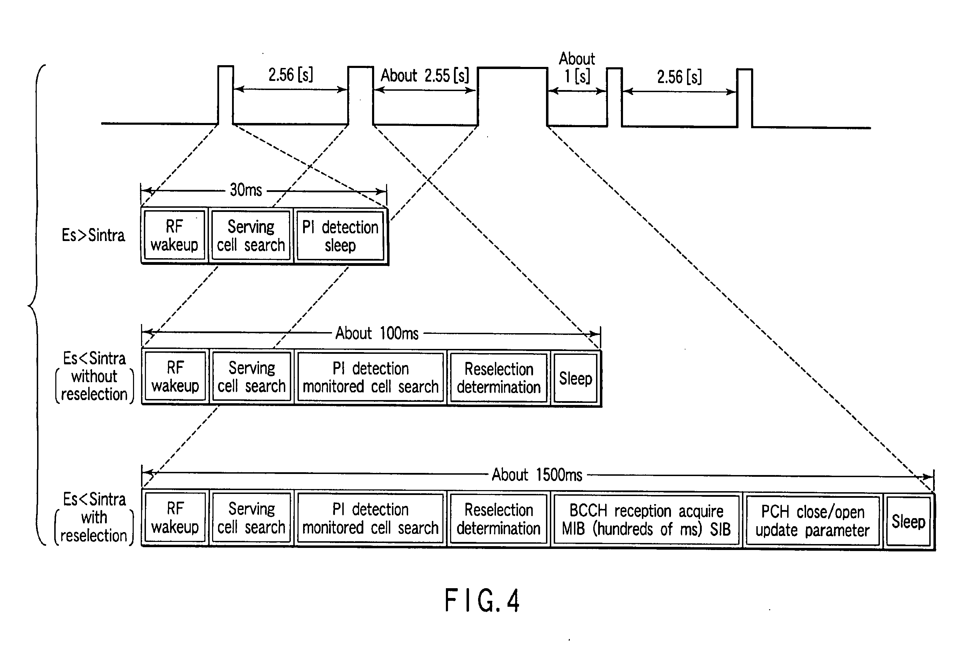

The CPU 7 advances to the step 2j, in which it detects the reception level Em of the pilot signal transmitted from the neighboring base stations. Then, the CPU 7 compares the previously detected reception level Eserve of the pilot signal from the serving base station with the detected reception level Em of the pilot signal from the neighboring base station. As a result of the comparison, if the detected values Em include a value that is a predetermined amount greater than the value Es, the reselection process is executed. After the completion of the reselection process, the CPU 7 resets the count value Cskip of the counter 72 in a step 2k, and sets the wake-up timing to a time the normal discontinuous cycle T later in a step 2m. Then, it determines whether the paging data addressed to the mobile communication terminal is received or not in the step 2c. If the paging data addressed thereto is not received, the mobile communication terminal enters the sleep period. The operation timing and contents of the operation, when the reselection process is performed, are shown in the lowermost chart in FIG. 4. As shown in this chart, the wake-up period of the mobile communication terminal in this case is about 1500 msec.

On the other hand, if the detected values Em do not include a value that is a predetermined amount greater than the value Es, the CPU 7 does not perform the reselection process. It resets the count value Cskip of the counter 72 in the step 2k, and sets the next wake-up timing to a time the normal discontinuous reception cycle T later. Then, it determines whether the paging data addressed to the mobile communication terminal is received or not in the step 2c. If the paging data addressed thereto is not received, the mobile communication terminal enters the sleep period. The operation timing and contents of the operation at this time are shown in the middle chart in FIG. 4. As shown in this chart, the wake-up period of the mobile communication terminal in this case is about 100 msec.

As a result of the comparison of the reception level, assume that the reception level Eserve is greater than the threshold value Sintra. In this case, the CPU 7 determines that the second discontinuous reception control algorithm can be used, because the reception level is high. Then, the CPU 7 executes the normal discontinuous reception control by the second discontinuous reception control algorithm, which does not include the skipping, as will be described below.

First, in a step 2g, the CPU 7 increments the counter value Cskip in the counter 72. In a step 2h, the CPU 7 compares the incremented count value Cskip with the threshold value Nskip (=48). If the count value Cskip is less than the threshold value Nskip (=48), the flow advances to the step 2m, in which the next wake-up timing is set to a time the normal discontinuous reception cycle T later. In the step 2c, the CPU 7 determines whether the paging data addressed to the mobile communication terminal is received or not. If the paging data addressed thereto is not received, the mobile communication terminal enters the sleep period. The operation timing and contents of the operation at this time are shown in the uppermost chart in FIG. 4. As shown in this chart, the wake-up period of the mobile communication terminal in this case is about 30 msec.

Subsequently, if the reception level Eserve greater than the threshold value Sintra is maintained, the CPU 7 repeats the control of the above process of the steps 2f, 2g, 2h, 2m, 2c and 2d at every wake-up time. In other words, if the reception quality of the pilot signal from the serving base station is kept high, the count value Cskip in the counter 72 is counted up at every wake-up time.

Now assume that the count value Cskip has reached the threshold value Nskip (=48). In this case, the CPU 7 determines that the reception quality of the pilot signal from the serving base station is high and satisfactorily stable, and advances to a step 2i. Then, it sets a new discontinuous reception cycle Tskip, which includes the skipping. The new discontinuous reception cycle Tskip is set as follows. First, the number N of times of the continuous transmission from the serving base station is estimated on the basis of the discontinuous reception cycle T and the time required for the reselection process set in the network system. Based on the estimated value N, the new discontinuous reception cycle Tskip = N × T is calculated, and the obtained value is set as Tskip.

Assume that the discontinuous reception cycle T set by the network system is 2560 msec and the reselection process time is 1500 msec. The number N of times of continuous transmission of paging data is 2, as clear from FIG. 6. Thus, the discontinuous reception cycle Tskip is set to 2T. Consequently, the next wake-up timing is set to a time 2T later, as shown in FIG. 3. In this case, as indicated by the broken line in FIG. 3, the wake-up period is skipped once.

Likewise, when the discontinuous reception cycle T is 1280 msec, the number N of times of continuous transmission of paging data is 3, as clear from FIG. 6. Thus, the wake-up period is skipped twice, and the next wake-up timing is set to a time 3T later.

If the wake-up period is skipped as described above, the power consumption corresponding to the skipped period is reduced. Accordingly, the lifetime of the battery is prolonged. On the other hand, when the wake-up period is skipped, the mobile communication terminal cannot receive paging data transmitted from the base station during the skipped period. However, the discontinuous reception cycle Tskip, including the above skipping, is set to the value N times the number of continuous transmission of the paging data from the base station. Therefore, as shown in FIG. 3, even if the mobile communication terminal fails to receive paging data by the skip of the wake-up period, it can surely receive the paging data retransmitted in the next wake-up period.

Assume that the reception level Es of the pilot signal from the serving station gets lower than the threshold value Sintra, in the case where the count value Cskip does not reach the threshold value Nskip (=48). In this case, the operation of the CPU 7 advances from the step 2f to the step 2k via the step 2j. In the step 2k, the count value Cskip of the counter 72 is reset, and the next wake-up timing is set to a time one cycle later in the step 2m.

In other words, the second discontinuous reception control algorithm, which includes the skipping, is executed only when the reception quality Eserve of the pilot signal from the serving station has been higher than the threshold value Nskip over 48 cycles, that is, when the high reception quality continues stable for a sufficient time. Therefore, the paging completion ratio is kept high, while the power consumption can be efficiently reduced. This is particularly effective when the mobile communication terminal remains stationary, for example, when it is left on a desk.

In general, since the conversation time is longer than the discontinuous reception cycle, the high reception quality is not necessarily maintained after the completion of the conversation. Further, the reselection process is generally performed when the reception quality is lowered. Therefore, in this case also, there is no guarantee that the high reception quality is maintained after the completion of the reselection. However, according to the embodiment of the present invention, in the state where the count value Cskip does not reach the threshold value Nskip (=48), when the paging data addressed to the mobile communication terminal is detected and the paging control is performed or when the reselection control is performed, the count value Cskip of the counter 72 is reset. Therefore, the second discontinuous reception control, including the skipping, is prevented from being performed in the state where the reception quality is unstable. Thus, the problem is prevented. Consequently, the second discontinuous reception control including the skipping can be performed more stably.

The present invention is not limited to the embodiment described above. For example, in the above embodiment, the threshold value Nskip to determine the stability of the reception quality is set to 48. However, the threshold value may be set to another value. Preferably, the threshold value is set to a value such that the period, in which the reception quality is fully stable, is at least two minutes.

Further, in the above embodiment, assuming that the number of times of continuous transmission of paging data is N, a new discontinuous reception cycle Tskip, which includes the skipping, is set to NxT. However, if the reduction in power consumption has higher priority than the paging completion ratio, a new discontinuous reception cycle Tskip, which includes the skipping, may be set to KxNxT (K is an integer). For example, the CPU 7 receives instruction information representing which of the paging completion ratio or the reduction in power consumption has higher priority through the input device of the user interface unit 5. If the received instruction information represents that the reduction in power consumption has higher priority, the CPU 7 sets the new discontinuous reception cycle Tskip, which includes the skipping, to KxNxT (K is an integer).

Moreover, the discontinuous reception cycle Tskip may be set longer (e.g., 2NxT, 3NxT, 4NxT, etc.) as the count value Cskip increases. In this case, the longer the period in which the reception quality is high, the higher the power consumption reduction effect of the mobile communication terminal.

Furthermore, in the above description of the embodiment, the mobile communication terminal employing the WCDMA (Wideband Code Division Multiple Access) system in compliance with 3GPP, is taken as an example. However, the present invention can be applied to another radio communication system employing a similar sequence.

**Claims**

1. A mobile communication terminal for use in a mobile communication system including a base station and the mobile communication terminal, in which the base station repeatedly transmits paging data a plurality of times in a transmission cycle T, a wake-up period and a sleep period are alternately set in the mobile communication terminal in a first discontinuous reception cycle set in accordance with the transmission cycle T in a standby condition, and the mobile communication terminal receives the paging data transmitted from the base station in the set wake-up period, the mobile communication terminal comprising:

   means (61) for detecting reception quality of a signal transmitted from the base station in every wake-up period;
   means (71, 72, 73) for measuring stability of the detected reception quality; and
   means (75) for changing the first discontinuous reception cycle to a second discontinuous reception cycle, which is longer than the first discontinuous reception cycle, when the measured stability exceeds a threshold value.

2. The mobile communication terminal according to claim 1, **characterized in that**:

   the means for measuring stability comprises:

      means (71) for comparing the detected reception quality with the threshold value;
      means (72) for counting a number of times the reception quality is determined equal to or higher than the threshold value; and
      means (73) for determining whether the reception quality has been equal to or higher than the threshold value for a preset number of times of the wake-up period based on a count value of the means (72) for counting, and
      the means for changing comprises means (75) for changing the first discontinuous reception cycle to a second discontinuous reception cycle, which is longer than the first discontinuous reception cycle, when the means (73) for determining determines that the reception quality has been equal to or higher than the threshold value for the preset number of times of the wake-up period.

3. The mobile communication terminal according to claim 1, **characterized in that** the means (75) for changing comprises:

   means for estimating a number N of times of repeated transmission of paging data from the base station based on the transmission cycle T and a time required for a reselection process to reselect a base station to be synchronized with the mobile communication terminal; and
   means for setting the second discontinuous reception cycle Tskip to Tskip=NxT based on the transmission cycle T and the estimated number N of times of repeated transmission.

4. The mobile communication terminal according to claim 1, **characterized in that** the means (75) for changing comprises:

   means for receiving instruction information representing which of a paging completion ratio or reduction in power consumption has higher priority; and
   means for setting the second discontinuous reception cycle Tskip to Tskip=KxNxT (K is an integer), when the received instruction information represents that the reduction in power consumption has higher priority.

5. The mobile communication terminal according to claim 1, **characterized in that** the means (75) for changing comprises:

   means for comparing the measured stability respectively with a first threshold value and a second threshold value which is greater than the first threshold value;
   means for changing the first discontinuous reception cycle to the second discontinuous reception cycle, which is longer than the first discontinuous reception cycle, when the measured stability exceeds the first threshold value; and
   means for changing the first discontinuous reception cycle to a third discontinuous reception cycle, which is longer than the second discontinuous reception cycle, when the measured stability exceeds the second threshold value.

6. The mobile communication terminal according to claim 1, **characterized by** further comprising:

   means for acquiring information representing a transmission cycle of the paging data from the base station;

means (2a) for comparing the acquired transmission cycle with a preset upper limit value; and

means for prohibiting change of the first discontinuous reception cycle, when the acquired transmission cycle exceeds the upper limit value as a result of comparison.

7. The mobile communication terminal according to claim 1, **characterized by** further comprising:

means (76) for executing paging control, when the mobile communication terminal receives the paging data addressed to itself from the base station; and

means (74) for returning the second discontinuous reception cycle of the wake-up period to the first discontinuous reception cycle, when the paging control is executed.

8. The mobile communication terminal according to claim 1, **characterized by** further comprising:

means (77) for executing a reselection process to reselect a base station to be synchronized with the mobile communication terminal; and

means (74) for returning the second discontinuous reception cycle of the wake-up period to the first discontinuous reception cycle, when the reselection process is executed.

9. A discontinuous reception method of a mobile communication terminal, comprising:

a step (2c, 2d) of alternately setting a wake-up period and a sleep period in a first discontinuous reception cycle and receiving the paging data transmitted from the base station in the set wake-up period;

a step (2e) of detecting reception quality of a signal transmitted from the base station in every wake-up period;

a step (2f, 2g) of measuring stability of the detected reception quality; and

a step (2h, 2i) of changing the first discontinuous reception cycle to a second discontinuous reception cycle, which is longer than the first discontinuous reception cycle, when the measured stability exceeds a threshold value.

10. The discontinuous reception method according to claim 9, **characterized in that**:

the step for measuring stability comprises:

a step (2f) of comparing the detected reception quality with the threshold value;

a step (2g) of counting a number of times the reception quality is determined equal to or higher than the threshold value; and

a step (2h) of determining whether the reception quality has been equal to or higher than the threshold value for a preset number of times of the wake-up period based on a count value obtained by the step of counting, and

the step of changing comprises a step (2i) of changing the first discontinuous reception cycle to a second discontinuous reception cycle, which is longer than the first discontinuous reception cycle, when it is determined in the step (2h) of determining that the reception quality has been equal to or higher than the threshold value for the preset number of times of the wake-up period.

11. The discontinuous reception method according to claim 9, **characterized in that** the step of changing comprises:

a step of estimating a number N of times of repeated transmission of paging data from the base station based on a transmission cycle T of the paging data from the base station and a time required for a reselection process to reselect a base station to be synchronized with the mobile communication terminal; and

a step of setting the second discontinuous reception cycle Tskip to Tskip=NxT based on the transmission cycle T and the estimated number N of times of repeated transmission.

12. The discontinuous reception method according to claim 9, **characterized in that** the step of changing comprises:

a step of receiving instruction information representing which of a paging completion ratio or reduction in power consumption has higher priority; and

a step of setting the second discontinuous reception cycle Tskip to Tskip=KxNxT (K is an integer), when the received instruction information represents that the reduction in power consumption has higher priority.

13. The discontinuous reception method according to claim 9, **characterized in that** the step of changing comprises:

a step of comparing the measured stability respectively with a first threshold value and a second threshold value which is higher than the first threshold value;

a step of changing the first discontinuous reception cycle to the second discontinuous reception cycle, which is longer than the first discontinuous reception cycle, when the measured stability exceeds the first threshold value; and

a step of changing the first discontinuous reception cycle to a third discontinuous reception cycle, which is longer than the second discontinuous reception cycle, when the measured stability exceeds the second threshold value.

**14.** The discontinuous reception method according to claim 9, **characterized by** further comprising:

a step of acquiring information representing a transmission cycle of the paging data from the base station;

a step (2a) of comparing the acquired transmission cycle with a preset upper limit value; and

a step of prohibiting change of the first discontinuous reception cycle, when the acquired transmission cycle exceeds the upper limit value as a result of comparison.

**15.** The discontinuous reception method according to claim 9, **characterized by** further comprising:

a step of executing paging control, when the mobile communication terminal receives the paging data addressed to itself from the base station; and

a step (2b) of returning the second discontinuous reception cycle of the wake-up period to the first discontinuous reception cycle, when the paging control is executed.

**16.** The discontinuous reception method according to claim 9, **characterized by** further comprising:

a step of executing a reselection process to reselect a base station to be synchronized with the mobile communication terminal; and

a step (2b) of returning the second discontinuous reception cycle of the wake-up period to the first discontinuous reception cycle, when the reselection process is executed.

FIG. 1

EP 1 499 144 A1

EP 1 499 144 A1

Start

2a
$T \geqq T_{upper}$ ?  —YES→ 1st discontinuous reception control

NO

2b
$C_{skip} = 0$

2c
PCH closed ? —YES→ End

NO

2d
Sleep

2e
Search for serving cell

2f
$E_{serve} > S_{intra}$ ? —NO→

YES

2g
$C_{skip}++$

2h
$C_{skip} < N_{skip}$ ? —YES→

NO

2i
Set wake-up timing after N×T

2j
Search for known cell/ search for unknown cell

2k
$C_{skip} = 0$

2m
Set wake-up timing after T

F I G. 2

11

F I G. 3

EP 1 499 144 A1

2.56 [s] | About 2.55 [s] | About 1 [s] | 2.56 [s]

Es>Sintra

| 30ms |
| RF wakeup | Serving cell search | PI detection sleep |

Es<Sintra ( without reselection )

| About 100ms |
| RF wakeup | Serving cell search | PI detection monitored cell search | Reselection determination | Sleep |

Es<Sintra ( with reselection )

| About 1500ms |
| RF wakeup | Serving cell search | PI detection monitored cell search | Reselection determination | BCCH reception acquire MIB (hundreds of ms) SIB | PCH close/open update parameter | Sleep |

FIG.4

EP 1 499 144 A1

40.96(s)

Repeat

2.56(s)    2.56(s)

10ms

SFN | 0 | 1 | 2 | ...... | 256+10 | ...... | 512+10 | ...... | 756+10 | ...... | 4095 | 0 |

PICH | 0 | 1 | 2 | ...... | 256+10 | ...... | 512+10 | ...... | 756+10 | ...... | 4095 | 0 |

Offset

[ Normally all 0 are included in the assigned slots,
but if mobile get termination, it becomes all 1 ]

| 0 | 1 | 2 | 3 | ......... | 21 | ......... | 140 | 141 | 142 | 143 |

(If the mobile detects PI=1, then look at this frame)

PCH

Offset

| 0 | 1 | 2 | ...... | 256+11 | ...... | 512+11 | ...... | 756+11 | ...... | 4095 | 0 |

FIG.5

Relationship between discontinuous reception cycle
and number of times of repeated transmission

| Reselection process time [ms] | Discontinuous reception cycle T [ms] | Number of times of repeated transmission N |
|---|---|---|
| 1500 | 5120 | 2 |
| | 2560 | 2 |
| | 1280 | 3 |
| | 640 | 4 |
| | 320 | 6 |

F I G. 6

EP 1 499 144 A1

**EP 1 499 144 A1**

European Patent
Office

**EUROPEAN SEARCH REPORT**

Application Number

EP 04 00 5491

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 892 507 A (AIWA CO) 20 January 1999 (1999-01-20)<br><br>* abstract *<br>* page 2, lines 10-37 *<br>* page 5, line 14 - page 6, line 46 *<br>* claims 1,2 *<br>* figures 1,8-10 *<br>----- | 1,2,5, 7-10,13, 15,16 | H04Q7/32 |
| X | US 6 240 288 B1 (KOMAILI JALEH  ET AL) 29 May 2001 (2001-05-29)<br><br>* abstract *<br>* column 2, lines 5-44 *<br>* column 4, lines 42-52 *<br>* column 7, lines 52-56 *<br>* column 8, lines 45-52 *<br>* column 9, line 20 - column 12, line 7 *<br>* claim 1; figures 6-8 *<br>----- | 1,3,4,6, 9,11,12, 14 | |
| A | US 6 381 451 B1 (DUGAST XAVIER  ET AL) 30 April 2002 (2002-04-30)<br>* abstract *<br>* column 2, lines 35-50 *<br>* column 4, line 22 - column 5, line 56 *<br>----- | 1-16 | TECHNICAL FIELDS SEARCHED  (Int.Cl.7)<br><br>H04Q |

The present search report has been drawn up for all claims

| Place of search | Date of completion of the search | Examiner |
|---|---|---|
| Munich | 17 September 2004 | Isopescu, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 1 499 144 A1**

## ANNEX TO THE EUROPEAN SEARCH REPORT
## ON EUROPEAN PATENT APPLICATION NO.

EP 04 00 5491

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2004

| Patent document cited in search report | | Publication date | Patent family member(s) | | Publication date |
|---|---|---|---|---|---|
| EP 0892507 | A | 20-01-1999 | JP | 9261153 A | 03-10-1997 |
| | | | EP | 0892507 A1 | 20-01-1999 |
| | | | US | 6324397 B1 | 27-11-2001 |
| | | | CN | 1214823 A | 21-04-1999 |
| | | | WO | 9736386 A1 | 02-10-1997 |
| US 6240288 | B1 | 29-05-2001 | WO | 9952312 A1 | 14-10-1999 |
| US 6381451 | B1 | 30-04-2002 | FR | 2786636 A1 | 02-06-2000 |
| | | | AU | 730955 B2 | 22-03-2001 |
| | | | AU | 6174599 A | 01-06-2000 |
| | | | CA | 2290116 A1 | 26-05-2000 |
| | | | EP | 1005242 A1 | 31-05-2000 |
| | | | JP | 2000165310 A | 16-06-2000 |

EPO FORM P0459

For more details about this annex : see Official Journal of the European Patent Office, No. 12/82

17